# EUROPEAN PATENT APPLICATION

(11) **EP 0 868 015 A1**
(43) Date of publication of application: **30.09.1998**
(21) Application number: 98103886.2
(22) Date of filing: 05.03.1998
(51) Int. Cl.: H02M 1/12, H02J 3/36

(54) **A device for converting direct voltage into a three-phase alternating voltage through pulse width modulation**

(30) Priority: 24.03.1997 SE 9701062
(71) Applicant: ASEA BROWN BOVERI AB, 721 78 Västeras (SE)
(72) Inventor: Lindberg, Anders, 115 38 Stockholm (SE); Palsson, Rolf, 772 04 Saxdalen (SE)
(74) Representative: Olsson, Jan

(57) **Abstract**

In a device for converting direct voltage into a three phase alternating voltage having a two level converter connected to a direct voltage network and an alternating voltage network a control apparatus for performing pulse width modulation is adapted to determine the pulse width modulation pattern for each phase by using a triangle wave (19-21) with the same fundamental frequency as the triangle waves for the other phases, invert this an even number of times during a fundamental oscillation of the reference alternating voltage (24-26) and position the instants of inversions of each triangle wave so in the time that always two triangle waves are half a period displaced with respect to the third.

## Description

### FIELD OF THE INVENTION AND PRIOR ART

The present invention relates to a device for converting direct voltage into a three-phase alternating voltage comprising at least a two level VSC-converter connected to a direct voltage network and an alternating voltage network as well as an apparatus adapted to control the converter depending upon a reference alternating voltage according to a pulse width modulation pattern specific for each phase of the alternating voltage network and determined by determining the intersection points between the reference alternating voltage for the respective phase and a triangle wave specific for that phase and having an amplitude being substantially half the direct voltage between the two poles of the direct voltage network and a frequency being a multiple of the frequency of the reference alternating voltage, so that for each phase pulses having a duration between two consecutive of said intersection points and an amplitude of substantially half said direct voltage, positive if the reference alternating voltage is located above the triangle wave and negative in opposite conditions, are delivered at the alternating voltage side of the converter.

Such devices may be used in all types of situations, where a direct voltage has to be converted into a three-phase alternating voltage, in which they may be used in for example reactive power compensation and in HVDC-plants (High Voltage Direct Current). In order to illuminate but accordingly not at all limiting the invention the specific application of such a device for HVDC will hereinafter be described.

A plant in which a device of the type mentioned above is included have recently become known through the licentiate thesis "PWM and control of two and three level high power voltage source converters" by Anders Lindberg, Kungliga Tekniska Högskolan, Stockholm, 1995. By using IGBTs (Insulated Gate Bipolar Transistor = bipolar transistor having an insulated gate) or GTOs (Gate Turn-off Thyristor) and connecting such in series in valves in converters, which is possible, since they may easily be turned on and turned off simultaneously, VSC- (Voltage Source Converter) converters for forced commutation have been possible to use for transmitting electric power between a direct voltage network for High Voltage Direct Current being voltage-stiff therethrough and alternating voltage networks connected thereto.

It is well known that such a voltage-stiff two level converter generates harmonics of three different types, plus, minus and zero sequence. It is no big problem to filtrate away the plus and minus sequences of these by means of harmonic filters connected to a HVDC-station. However, the harmonics of zero sequence type constitute a bigger problem, since the combination two level converter and three phase alternating voltage results in a total output voltage of the pulses at the alternating voltage side of the converter being never zero, which means a zero sequence voltage, which gives rise to a zero sequence current which is closed through the inductors of a HVDC-station without a transformer down through an alternating voltage filter existing at such a station and back to capacitors located on the direct voltage side, and the midpoint of which is grounded so as to prevent a propagation of zero sequence currents from one station to another of the direct voltage network. In de-vices of the type defined in the introduction known until today the zero sequence current generated will be high and gives by this rise to unnecessarily high stresses on a converter station in which the device is included. A conceivable solution consists in installing particular zero sequence filters so as to reduce the zero sequence current, but this gives rise to considerably increased costs, which is contradictory to the object to replace transformers by inductors, which is possible in this type of stations and results in lower costs.

### SUMMARY OF THE INVENTION

The object of the present invention is to provide a device of the type defined in the introduction, in which the problems mentioned above of the generation of zero sequence currents have been reduced to a large extent.

This object is according to the invention obtained by in such a device arrange the control apparatus for determining the pulse width modulation pattern for each phase to use a triangle wave having the same fundamental frequency as the triangle waves of the other phases, invert this an even number of times during a fundamental oscillation of the reference alternating voltage and locate the inversion instants for each triangle wave so in the time that always two triangle waves are displaced half a period with respect to a third.

Accordingly, the control apparatus gives rise to a pulse width modulation method being modified with respect to pulse width modulation methods already known, such as sinusoidal PWM, thanks to said inversions. One and the same triangle wave is namely normally used for all the three phases, which results in the use of so called zero vectors at each turning point of the triangle wave for adaption of the pulses fed out on the alternating voltage side to the reference alternating voltage, so that they are synchronised with the alternating voltage network. A zero vector means that all alternating current phases connected to the converter are con-nected to the same direct voltage potential, and these vectors generates therefor a high zero sequence voltage. By using different triangle waves for each phase in the way according to the invention and carry out said inversion, no zero vectors will be used when the calculated voltage time area is to be generated by the converter, but only vectors having an amplitude being a third of these. The zero vectors are in the practice replaced by vectors preventing that one "is not moving" in the instants in question but instead moves forwardly and backwardly in the voltage time diagram. It is necessary for a maintained periodicity to carry out an even number of inversions per fundamental oscillation. Accordingly, inversion is interpreted as an instantaneous reversion of the phase of the triangle wave in question, i.e. it is phase displaced by 180°, so that a peak value is converted to a bottom value or conversely.

In the case of a HVDC-station it is through the construction of the device according to the invention possible to use two level converters without any transformers and without any costly zero sequence filters. It would also be possible in the case of no transformer to manage without any zero sequence filters when using three level converters, i.e. a NPC-bridge, in which zero sequences may be illuminated, but such a converter is more complicated than a two level converter. It has turned out that the harmonics dominating in a device of the type according to the invention will be the plus and minus sequence components, which will be slightly higher than in conventional pulse width modulation and there will therefor be slightly higher demands on the filtration of the alternating voltage filters. However, the zero sequence components will be very small through the use of the device according to the invention, and the dominating zero sequence components are of a higher order. Since the zero sequence current generated is primarily determined by inductive elements, a high order number means that the resulting zero sequence current will be much lower than in the use of the prior art devices.

According to a preferred embodiment of the invention the control apparatus is adapted for the respective phase to cause said inversions at substantially uniform time intervals. This has been found to be an advantage so as to avoid disturbances, such as addition harmonics or resonance phenomena of the alternating voltage as a consequence of the inversions.

According to another preferred embodiment of the invention the control apparatus is adapted to generate said inversions so that the time interval between an inversion of one phase and the next inversion of any of the other phases is substantially constant. This is an advantage for obtaining a minimal risk of occurrence of disturbances in the alternating voltage generated as a consequence of said inversions. In the case of two inversions per phase and fundamental oscillation, this would accordingly mean that each inversion is phase displaced by 60° with respect to the adjacent in-versions. Thus, the inversion instants are of importance for the symmetry.

According to another preferred embodiment of the invention the control apparatus is adapted for the respective phase to cause inversions at least at the turning points of the reference alternating voltage for this phase. It has turned out that it is advantageous for surely avoiding the creation of said zero vectors to chose said turning points for said in-versions.

According to another preferred embodiment of the invention the control apparatus is adapted for each phase to generate inversions two times per fundamental oscillation period. Two inversions per period is a minimum, and a higher even number of inversions were for true conceivable, but this would mean a difference with respect to the fundamental frequency of the triangle waves being to great and by that lead to increased switching losses. It is therefor advantageous to invert the triangle wave for each phase two times per fundamental oscillation period so as to keep these switching losses at a low level.

According to another preferred embodiment of the invention the control apparatus is adapted for the respective phase to generate said inversion when the reference alternating voltages of the two other phases intersect each other or just thereafter. "Just thereafter" means that the inversion takes place after said intersection but considerably more close to this intersection than the intersection following thereupon. It has turned out that this is a suitable criteria for avoiding the creation of the zero vectors not desired.

According to another preferred embodiment of the invention the device is adapted for conversion of direct voltage into alternating voltage in a station of a plant for transmitting electric power through a direct voltage network for High Voltage Direct Current (HVDC). It has turned out that a device of the type according to the invention has particular advantages when it is used in a station of such a plant, which appear from the discussion above.

Further advantages as well as advantageous features of the invention will appear from the following description as well as the other dependent claims.

### BRIEF DESCRIPTION OF THE DRAWINGS

With reference to the appended drawings, below follows a description first of a conventional sinusoidal pulse width modulation through a two level VSC-converter for converting direct voltage to a three phase alternating voltage and then a preferred embodiment of the device according to the invention cited as an example.

In the drawings:
Fig 1 illustrates a voltage-stiff forced commutated two level converter connected to an alternating voltage network through inductors,
Fig 2 illustrates the principle of the conventional sinusoidal pulse width modulation,
Fig 3 illustrates the conventional sinusoidal pulse width modulation for a three phase alternating voltage,
Fig 4 is a view in the so called αβ-plane of a vector sequence according to the modulation pattern in Fig 3,
Fig 5 is a graph illustrating harmonics created in pulse width modulation according to Fig 3,
Fig 6 is a view illustrating the principles of the pulse width modulation caused by a device according to a preferred embodiment of the invention,
Fig 7 is a view of the so called αβ-plane, which is used so as to explain the principles of the present invention,
Fig 8 is a view corresponding to Fig 4 for the pulse width modulation according to Fig 6,
Fig 9 is a view illustrating the flow (voltage time area) with the pulse width modulation process according to Fig 6 and
Fig 10 is a view corresponding to Fig 5 for the pulse width modulation process according to Fig 6.

### BRIEF DESCRIPTION OF A PRIOR ART DEVICE

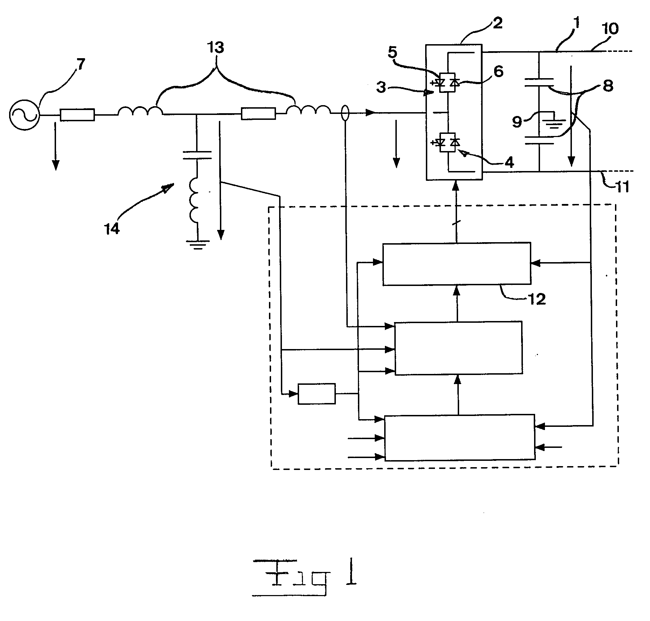

A voltage-stiff converter station without transformers included in a plant for transmitting electric power through a direct voltage network 1 for High Voltage Direct Current (HVDC) is illustrated in Fig 1. This station has at least one VSC-converter 2, which in a conventional way has current valves 3, 4 in the form of semiconductor components 5 of turn-on and turn-off type, such as IGBTs, which are connected in anti-parallel with a freewheeling diode 6. Although only one IGBT is shown for each valve, this may represent a plurality of IGBTs connected in series and simultaneously controlled. Only the connection of the converter 2 to one phase of an alternating voltage network 7 is shown in the figure, but the converter is in the practice in this way connected to the three different phases of the alternating voltage network through two respective current valves. For preventing that zero sequence currents propagates from one station to another station the capacitor 8 of the direct voltage side is grounded in the midpoint 9. Pulses having an amplitude of half the direct voltage between the two poles 10, 11 of the direct voltage network 1 may in this way be delivered to a respective phase of the alternating voltage network 7 through an appropriate control of the converter 2. An apparatus 12 schematically indicated is adapted for the control of the converter 2 by sending turn-on pulses to the IGBTs of the converter. The apparatus considers in the regulation thereby the magnitude of the direct voltage of the direct voltage network, demands on consumption of reactive power, active power fed in by the alternating voltage network or demanded thereby and so on. Current and voltage may be measured through a so called sampling process so that the reference voltage may be calculated and the pulse width modulation pattern be determined.

It is also illustrated in Fig 1 that the converter is connected to the alternating voltage network through inductors 13, i.e. without any transformer, and that a so called harmonic filter 14 is connected to the alternating voltage network so as to remove troublesome harmonics in the form of plus and minus sequences.

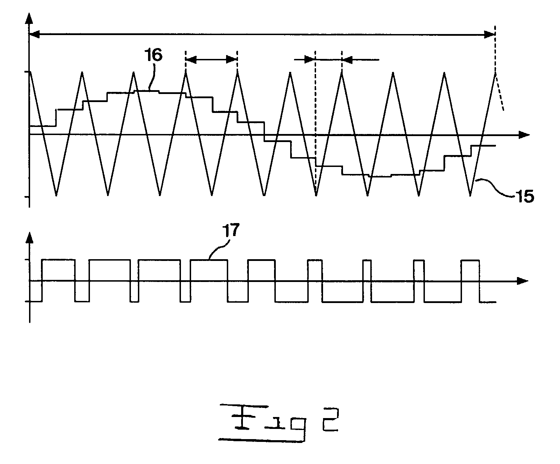

It is illustrated in Fig 2 for one of the phases of the alternating voltage network 7 how the so called sinusoidal-PWM is carried out. An imagined triangle wave 15 having an amplitude of substantially half the direct voltage between the poles of the direct voltage network and a frequency being a multiple, in the case shown nine times, of the frequency of the alternating voltage is put over a reference alternating voltage 16 for the phase in question. The same triangle wave is put on the reference alternating voltage for each of the phases, in which the reference alternating voltages for the different phases are displaced by 120 electric grades with respect to each other. The apparatus 12 is adapted to control the converter to emit pulses 17 having a duration between two consecutive intersection points between the triangle wave and the reference alternating voltage on the alternating voltage side thereof for the phase in question, in which these pulses are controlled to be positive should the reference alternating voltage be located above the triangle wave and negative under opposite circumstances. The relationship between the frequency of the triangle wave and the fundamental frequency of the reference alternating voltage is defined as the pulse number p. The harmonics dominating in the phase voltages realised by this sinusoidal-PWM method are of the following order and type:
p-2: plus sequence, p: zero sequence, p+2: minus sequence, 2p-3: zero sequence, 2p-1: minus sequence, 2p+1: plus sequence and 2p+3: zero sequence.

It is primarily zero sequences that make trouble. The zero sequence voltage is defined as the sum of the voltages of the pulses of the three phases in a given moment divided by 3, which means that it may never be 0. This zero sequence voltage will give rise to a zero sequence current forming a closed loop through the inductors down through the alternating voltage filter 14 and back through the direct voltage capacitors 8. The zero sequence current generated gets high, which will give rise to unnecessary high stresses on the converter station and requirements of expensive zero sequence filters.

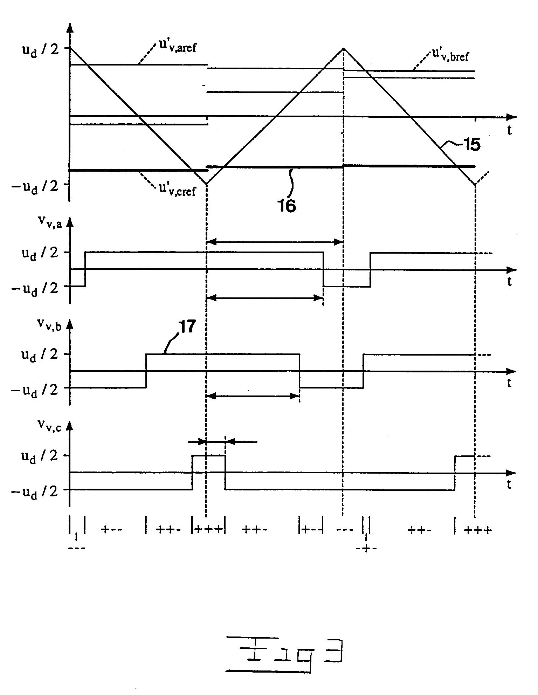

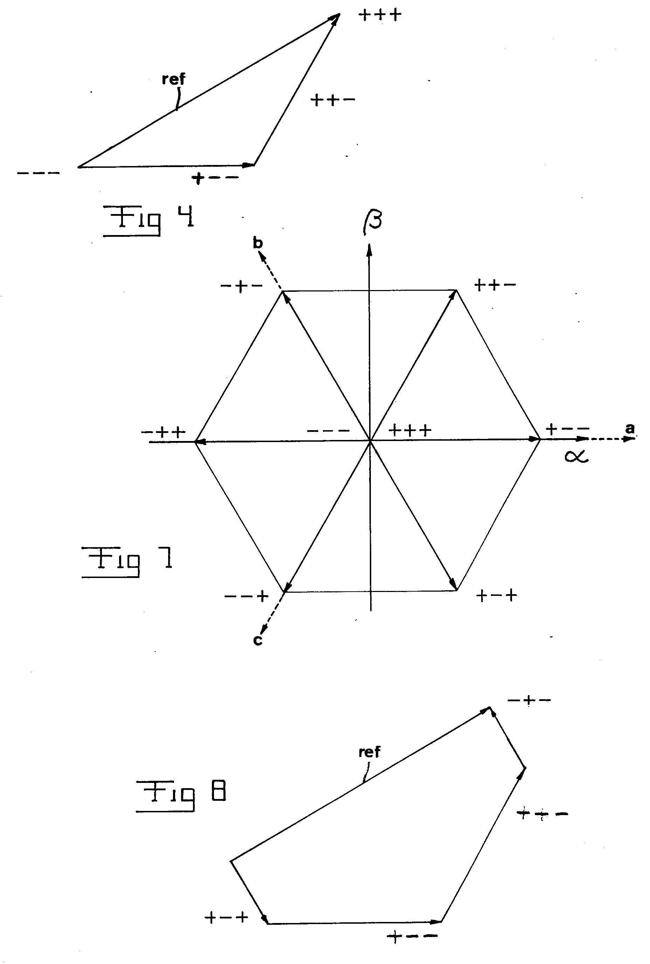

It is schematically illustrated in Fig 3 how the pulse width modulation according to Fig 2 gives rise to different voltage vectors composed by the pulses of the three phases at different points of time. "+" indicates that the voltage pulse has a value of the direct voltage between the poles of the direct voltage network u_{d} divided by 2 and a "-" a value of -u_{d}/2. It appears that in the beginning and at the end of the respective straight line of the triangle wave so called zero vectors are formed, i.e. all the alternating current phases are connected to the same direct voltage potential. Exactly these zero vectors used for keeping the pulse generation synchronised with the alternating voltage network results in a zero sequence voltage being three times as high as other vectors and by that a high zero sequence current having the negative consequences mentioned above. It is illustrated in Fig 4 in the so called αβ-plane how a given voltage time area is obtained through the vector sequence:
---, +--, ++- and +++.

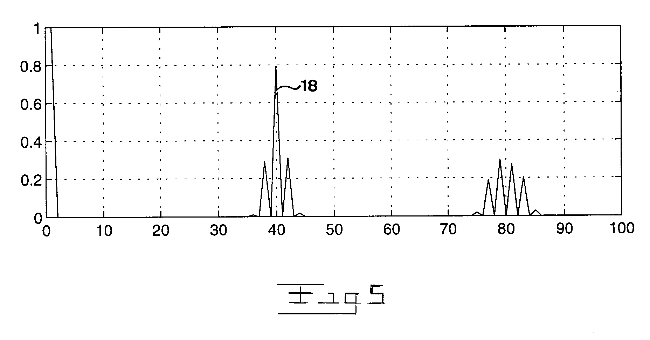

The magnitude of the different pulse sequences at p = 40 is illustrated in Fig 5, and it may be mentioned that p preferably is at least as high as 10. It appears that the zero sequence voltage 18 at p is very high and accordingly gives rise to a high zero sequence current.

### DETAILED DESCRIPTION OF A PREFERRED EMBODIMENT OF THE INVENTION

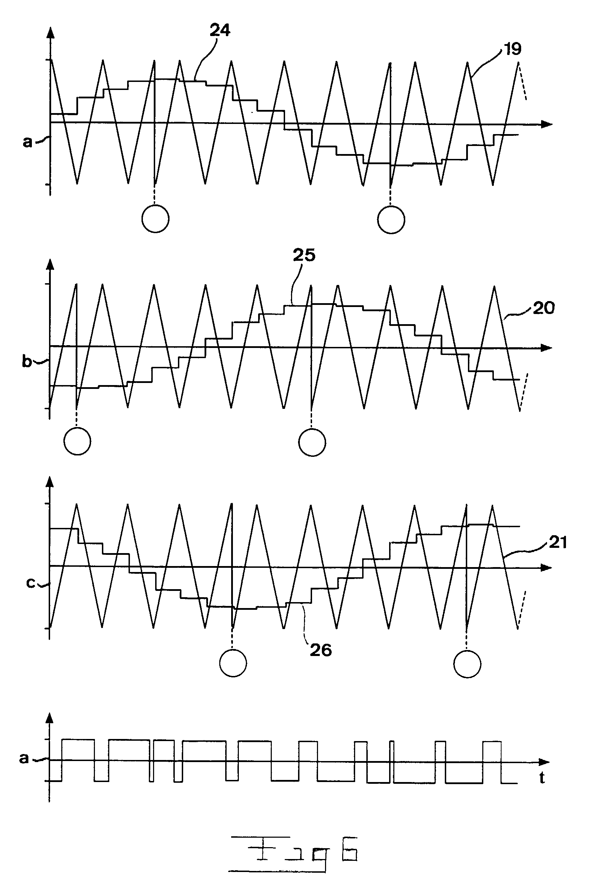

It is illustrated in Fig 6 how the control apparatus 12 of a device according to a preferred embodiment of the invention is adapted to control the two level converter 2. It should be noticed that this way to control a two level converter is not restricted to the use illustrated in Fig 1, although that use will hereinafter be discussed. The control apparatus utilises one triangle wave 19, 20, 21 for each phase a, b, c of the reference alternating voltage 24-26, in which the different triangle waves have the same fundamental frequency. Each of the triangle waves are inverted two times during a fundamental oscillation of the reference alternating voltage, in which the inversion instants for each triangle wave are so located in the time that always two triangle waves are half a period displaced with respect to a third. More exactly, the time interval between an inversion of one phase and the next inversion of any of the other phases is substantially constant, which means that the distance between such inversions is substantially 60°. The inversions take place at turning points of the triangle wave and at turning points of the reference alternating voltage for the phase in question, and more exactly the triangle waves change phase position according to the following:
- u_{v,bref} >u_{v,cref}^{:}: triangle wave in phase a is inverted
- u_{v,bref}≤u_{v,cref}:: triangle wave in phase a is inverted back
- u_{v,cref}>u_{v,aref} :: triangle wave in phase b is inverted
- u_{v,cref}≤u_{v,aref}:: triangle wave in phase b is inverted back
- u_{v,aref}>u_{v,bref} :: triangle wave in phase c is inverted
- u_{v,aref}≤u_{v,bref}:: triangle wave in phase c is inverted back

The pulse width modulation pattern for the upper alternating voltage phase a is illustrated in the bottom of the figure.

Through the additional commutations 0 caused by the inversions of the triangle waves and in this way use different triangle waves for the different phases the zero vectors disappear and only vectors having a third of the amplitude thereof are present.

The so called αβ-plane is illustrated in Fig 7, which shows which vectors may be realised by a two level converter. The figure has been divided into six sectors and depending upon in which sector the reference alternating voltage vector is located the following switching sequences may be used during each sampling interval through the device according to the invention:
Sector 1: "+-+" -> "+--" -> "++-" -> "-+-" or conversely
Sector 2: "+--" -> "++-" -> "-+-" -> "-++" or conversely
Sector 3: "++-" -> "-+-" -> "-++" -> "--+" or conversely
Sector 4: "-+-" -> "-++" -> "--+" -> "+-+" or conversely
Sector 5: "-++" -> "--+" -> "+-+" -> "+--" or conversely
Sector 6: "--+" -> "+-+" -> "+--" -> "++-" or conversely

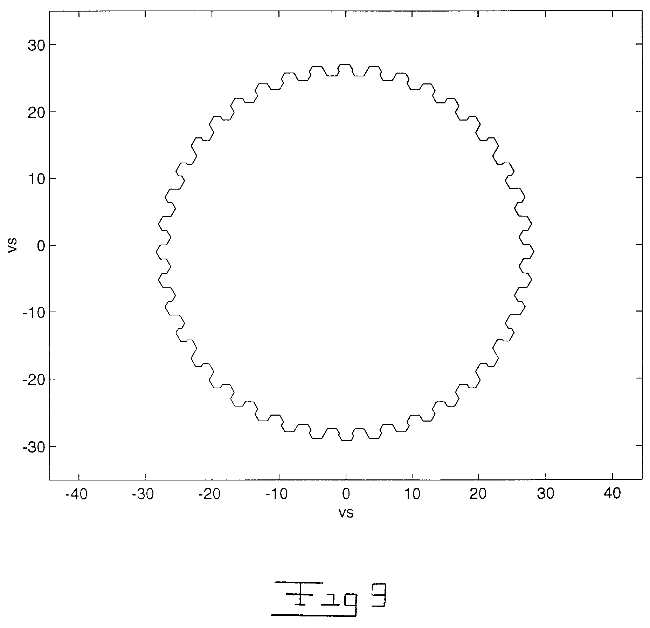

It should be noticed that no zero vectors are used, but two other vectors oppositly directed are instead used for each sector, so that it is here not standing still close to the turning points of the triangle waves, but it is instead moved forwardly and backwardly for synchronising with the network. This is illustrated for the sector 1 in Fig 8.

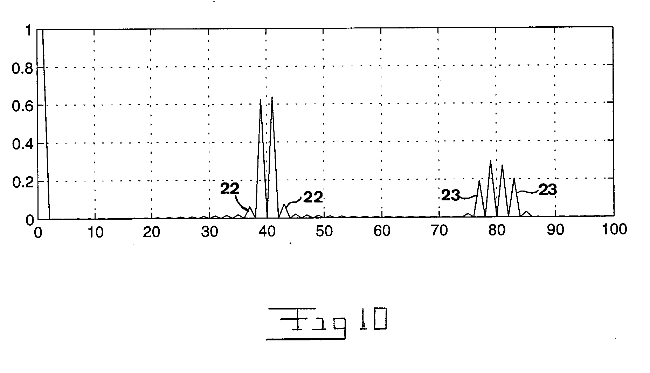

The flow is illustrated in Fig 9, i.e. the voltage time area achieved during a fundamental oscillation of the reference alternating voltages, in which p is 40.

The harmonics formed in the pulse width modulation shown in Fig 6 are illustrated in Fig 10, in which the dominating harmonics here are:
p-3: zero sequence, p-1: plus sequence, p+1: minus sequence, p+3: zero sequence, 2p-3: zero sequence, 2p-1: minus sequence, 2p+1: plus sequence and 2p+3: zero sequence.

The plus and minus sequence components of the dominating harmonics are compared with the conventional sinusoidal-PWM (see Fig 5) higher, which means a somewhat higher requirement of the filtration of the alternating voltage filters. However, this should not influence the cost of the filters in any higher degree. The important thing is here that the zero sequence components are very small. It appears that the zero sequence components 22 having a low order number are very small, and the dominating zero sequence components 23 are of the order 2p-3 and 2p+3 and have also a comparatively low amplitude. Since the zero sequence current generated is primarily determined by inductive elements (primarily the phase inductors 13) a high order number and by that a high frequency means that the resulting zero sequence current will be much lower than for the zero sequences according to Fig 5.

The invention is of course not in any way restricted to the preferred embodiment described above, but many possibilities to modifications thereof will be apparent to a man skilled in the art without departing from the basic idea of the invention.

It would for example be possible to use more than two inversions during a fundamental oscillation of the reference alternating voltage, should this be desired.

The invention is discussed above with reference to a digital system, but it covers also an analogous system, and a real triangle wave, not only a calculated one, may exist.

## Claims

1. A device for converting direct voltage into a three-phase alternating voltage comprising at least a two level VSC-converter (2) connected to a direct voltage network (1) and an alternating voltage network (7) as well as an apparatus (12) adapted to control the converter depending upon a reference alternating voltage according to a pulse width modulation pattern specific for each phase of the alternating voltage network and determined by determining the intersection points between the reference alternating voltage for the respective phase and a triangle wave specific for that phase and having an amplitude being substantially half the direct voltage between the two poles (10, 11) of the direct voltage network and a frequency being a multiple of the frequency of the reference alternating voltage, so that for each phase pulses having a duration between two consecutive of said intersection points and an amplitude of substantially half said direct voltage, positive if the reference alternating voltage is located above the triangle wave and negative in opposite conditions, are delivered at the alternating voltage side of the converter,
**characterized** in that the control apparatus (12) is adapted for determining the pulse width modulation pattern for each phase (a, b, c) to use a triangle wave (19, 21) having the same fundamental frequency as the triangle waves for the other phases, invert this an even number of times during a fundamental oscillation of the reference alternating voltage (24-26) and locate the inversion instants for each triangle wave so in the time that always two triangle waves are displaced half a period with respect to a third.

2. A device according to claim 1,
**characterized** in that the control apparatus (12) is adapted for the respective phase (a, b, c) to cause said inversions with substantially uniformly time intervals.

3. A device according to claim 1 or 2,
**characterized** in that the control apparatus (12) is adapted to generate said inversions so that the time interval between an inversion of one phase and the next inversion of any of the other phases is substantially constant.

4. A device according to any of the claims 1-3,
**characterized** in that control apparatus (12) is adapted for the respective phase (a, b, c) to cause inversions at least at the turning points of the reference alternating voltage (24-26) for that phase.

5. A device according to any of claims 1-4,
**characterized** in that the control apparatus (12) is adapted for each phase (a, b, c) to generate inversions two times per fundamental oscillation period.

6. A device according to any of claims 1-5,
**characterized** in that the control apparatus (12) is adapted for the respective phase (a, b, c) to generate a said inversion when the reference alternating voltages (24-26) of the two other phases intersect each other or just thereafter.

7. A device according to any of claims 1-6,
**characterized** in that the control apparatus (12) is adapted for the respective phase (a, b, c) to cause said inversions at turning points of the triangle wave belonging to that phase.

8. A device according to any of claims 1-7,
**characterized** in that said multiple is larger than 10.

9. A device according to any of claims 1-8,
**characterized** in that the device is adapted for conversion of direct voltage into alternating voltage in a station of a plant for transmitting electric power through a direct voltage network (1) for High Voltage Direct Current (HVDC).
